# EUROPÄISCHE PATENTSCHRIFT

(11) **EP 2 468 625 B1**
(45) Veröffentlichungstag und Bekanntmachung des Hinweises auf die Patenterteilung: **10.08.2016**
(21) Anmeldenummer: 11171419.2
(22) Anmeldetag: 27.06.2011
(51) Int. Cl.: B64C 1/14, E05B 51/02

(54) **Sicherheitseinrichtung für Luftfahrzeuge und Tür oder Klappe für ein Luftfahrzeug**
Safety device for aircraft and door or hatch for an aircraft
Dispositif de sécurité pour aéronefs et porte ou trappe pour aéronef

(30) Priorität: 21.12.2010 DE 102010055447
(43) Veröffentlichungstag der Anmeldung: 27.06.2012
(73) Patentinhaber: HS Products Engineering GmbH, 82239 Alling (DE)
(72) Erfinder: Werner Oho Ziegenbein, 81929 München (DE); Juling Ullrich, 83209 Priem (DE)
(74) Vertreter: Wietzke, Andreas

(56) Entgegenhaltungen:
- EP-A1- 1 162 333
- EP-A1- 1 544 098
- EP-A1- 1 744 061

## Beschreibung

Die Erfindung betrifft eine Sicherheitseinrichtung für Luftfahrzeuge zur Notöffnung von Türen und/oder Klappen sowie eine entsprechende Tür oder Klappe für ein Luftfahrzeug mit einer solchen Sicherheitseinrichtung.

Eine Sicherheitseinrichtung zur Notöffnung von Hauben ist aus EP 1 744 061 bekannt, die als nächsliegender Stat der Technik betrachtet wird. Sicherheitseinrichtungen zur Öffnung von Türen oder Klappen von Luftfahrzeugen sind grundsätzlich bekannt. Die bekannten Sicherheitseinrichtungen kommen zum Einsatz, um sicherzustellen, dass in Notfällen für Luftfahrzeuge die entsprechenden Türen und/oder Klappen sich möglichst schnell öffnen lassen, um einen Fluchtweg für die Passagiere des Luftfahrzeugs freizugeben. Insbesondere ist dies bei Luftfahrzeugen in Form von Passagierflugzeugen oder Passagierhubschraubern relevant. Insbesondere für solche Luftfahrzeuge gelten strenge Regeln, in welchen Zeiträumen sich Türen in Notsituationen öffnen müssen. Befindet sich ein Luftfahrzeug, beispielsweise ein Passagierflugzeug nach einer Notlandung, in einer Notsituation, so muss sich jede der Türen, die zur Evakuierung der Passagiere aus dem Luftfahrzeug dienen, möglichst schnell, insbesondere innerhalb von zwei bis dreißig Sekunden vollständig öffnen lassen. Im Notfall ist es also notwendig, dass die Öffnung der Tür mit besonders hoher Geschwindigkeit gezielt vonstattengeht.

Darüber hinaus ist es notwendig, dass sich möglichst schnell, insbesondere in einem Bereich zwischen zehn bis 60 Sekunden nach dem Öffnen, die Tür auch wieder manuell schließen lässt, wenn beispielsweise außerhalb des Luftfahrzeugs eine Umgebung vorgefunden wird, die ein Evakuieren an dieser Tür nicht möglich macht. Dies ist beispielsweise der Fall, wenn es auf einer Seite des Flugzeugs brennt, sodass nach dem Öffnen der jeweiligen Tür festgestellt wird, dass auf dieser Seite nicht evakuiert werden kann. Um sicherzustellen, dass der Brand nicht auf das Innere des Luftfahrzeugs übergreift, muss diese Tür möglichst schnell wieder verschließbar sein.

Bei den bekannten Luftfahrzeugen kommen daher Sicherheitseinrichtungen zum Einsatz, um die Türen und/oder Klappen in den geforderten Zeiträumen zu öffnen, beziehungsweise wieder verschließbar zu machen. Zur Öffnung werden dabei üblicherweise Hebelkinematiken verwendet, die zum Beispiel mit Pneumatiksystemen in Form von Pneumatikzylindern zusammenwirken. Auch elektrische Öffnungssysteme, die über Elektromotoren die Türen oder Klappen in dem gewünschten Zeitraum öffnen, sind grundsätzlich bekannt.

Nachteilig bei den bekannten Systemen ist einerseits ihr komplexer Aufbau, bei mechanischen Systemen, andererseits deren hohes Gewicht, welches das Gewicht des Flugzeugs in signifikanter Weise erhöht. Auch die Türen werden durch die komplexe und schwere Struktur der bekannten Sicherheitseinrichtungen deutlich schwerer. Da die Türen im Normalbetrieb nach dem Landen und vor dem Starten geöffnet beziehungsweise geschlossen werden müssen und dieses Öffnen und Schließen üblicherweise vom Kabinenpersonal eines Flugzeugs per Hand erfolgt, ist das Gewicht hinsichtlich einer Obergrenze beschränkt, welche maximal von dem Kabinenpersonal eines Luftfahrzeugs maximal bewegt werden kann. Übersteigt das Gewicht der Tür diesen Maximalwert, so sind Öffnungshilfen vorzusehen, die zusätzliche Komplexität und damit zusätzliche Kosten und darüber hinaus zusätzliches Gewicht für die jeweilige Tür mit sich bringen.

Darüber hinaus erzeugt eine weitere Anforderung an die Sicherheit für Luftfahrzeuge bei den bekannten Systemen folgende Probleme. So ist es notwendig, dass die Sicherheitseinrichtung auch nach dem vollständigen Abschalten sämtlicher Systeme eines Luftfahrzeugs noch relative lange, insbesondere zwischen zwanzig und vierzig Minuten lang funktionsfähig bleibt. Das bedeutet also, dass selbst nach zwanzig bis vierzig Minuten ohne Kontakt zu einem Bordnetz zur Stromversorgung oder einem aktiven Pumpensystem zur Erzeugung eines Luftdrucks in einem Pneumatiksystem, die Sicherheitseinrichtung funktionsfähig bleiben muss. Hierfür sind deswegen häufig in redundanter Ausführung Zusatzkomponenten vorzusehen, wie beispielsweise Energiespeicher, die die geforderten zwanzig bis vierzig Minuten für die Funktionsfähigkeit der Sicherheitseinrichtung überbrücken können. Auch hier bringen die Zusatzkomponenten neben ihrem höheren Gewicht und Konstruktionsaufwand einen beträchtlichen Kostennachteil mit sich.

Aufgabe der vorliegenden Erfindung ist es nun, die voranstehend erläuterten Nachteile bekannter Sicherheitseinrichtungen zu beheben. Insbesondere ist es Aufgabe der vorliegenden Erfindung eine Sicherheitseinrichtung zur Verfügung zu stellen, die kostengünstig herstellbar ist, konstruktiv einfach gestaltet ist und darüber hinaus in sicherer Weise die notwendigen Kriterien für Luftfahrzeuge erfüllt.

Gelöst wird voranstehende Aufgabe durch eine Sicherheitseinrichtung mit den Merkmalen des unabhängigen Anspruchs 1 sowie durch eine Tür oder Klappe mit den Merkmalen des Anspruchs 14. Vorteilhafte Ausführungsformen ergeben sich unter anderem aus den an die unabhängigen Ansprüche anschließenden Unteransprüchen.

Eine erfindungsgemäße Sicherheitseinrichtung für Luftfahrzeuge zur Notöffnung von Türen und/oder Klappen weist zumindest eine Brennkammer auf, die eine pyrotechnische Ladung enthält. Weiter ist in der Brennkammer wenigstens eine Anzündvorrichtung zur elektrischen Anzündung der pyrotechnischen Ladung vorgesehen. Die pyrotechnische Ladung kann dabei eine pyrotechnische Ladung sein, wie sie beispielsweise im Fahrzeugsicherheitsbereich zum Aufblasen von Airbags zum Einsatz kommt. So sind zum Beispiel pyrotechnische Ladungen aus Ammoniumchlorat und/oder Ammoniumnitrat denkbar. Charakteristisch für die pyrotechnische Ladung ist es, dass sie nach dem Anzünden durch die Verbrennung im Wesentlichen explosionsartig, also durch einen sehr schnellen Abbrand, ein Gas erzeugt, das in seinem Volumen um ein Vielfaches größer ist, als das Volumen der unangezündeten pyrotechnischen Ladung. Mit anderen Worten wird auf diese Weise explosionsartig ein großes Gasvolumen zur Verfügung gestellt, welches als Volumen und/oder als Druck im Weiteren verwendbar ist.

Bei einer erfindungsgemäßen Sicherheitseinrichtung ist weiter zumindest eine Pufferkammer vorgesehen, die mit der Brennkammer in fluidkommunizierender Verbindung steht, um durch die Anzündung und Verbrennung der pyrotechnischen Ladung entstehendes Gas aufzunehmen. Das Gas, welches durch das Verbrennen der pyrotechnischen Ladung in der Brennkammer entsteht, kann also aus dieser gezielt entweichen und wird über die fluidkommunizierende Verbindung in die Pufferkammer geführt. Diese fluidkommunizierende Verbindung kann als Kanal oder auch als einfache Öffnung zwischen der Brennkammer und der Pufferkammer ausgeführt sein. Auch Ventile, insbesondere Rückschlagventile sind für diese fluidkommunizierende Verbindung denkbar, die zwar einen Übertritt des Gases aus der Brennkammer in die Pufferkammer ermöglichen, jedoch ein Rückströmen des entwichenen Gases verhindern. Auch Sicherungen in der fluidkommunizierenden Verbindung, die ein Austreten der noch unverbrannten pyrotechnischen Ladung, beziehungsweise von feststofflichen Rückständen der Verbrennung der pyrotechnischen Ladung herrühren, können vorgesehen sein. Solche Sicherungen können beispielsweise Filtereinsätze sein.

Mit anderen Worten ist es auf diese Weise möglich, dass das entstehende Gas aus der Brennkammer in die Pufferkammer überführt wird. Die Pufferkammer ist dabei vorteilhafterweise hinsichtlich ihres Innenvolumens größer als die Brennkammer, sodass das expandierende Gas durch das Verbrennen der pyrotechnischen Ladung aus der Brennkammer entweicht und anschließend die Pufferkammer ausfüllt. Beim Ausfüllen der Pufferkammer wird durch das Nachströmen von Gas aus der Brennkammer durch die fluidkommunizierende Verbindung ein Druck im Inneren der Pufferkammer aufgebaut.

Bei einer erfindungsgemäßen Sicherheitseinrichtung ist darüber hinaus zumindest eine Arbeitskammer vorgesehen, die mit zumindest einer Pufferkammer in fluidkommunizierender Verbindung steht, um unter Druck stehendes Gas aus der Pufferkammer aufzunehmen. Dabei weist die zumindest eine die Arbeitskammer begrenzende Wandung einen bewegbaren Kolben auf, sodass das Volumen der Arbeitskammer über den Druck in der Arbeitskammer variierbar ist. Mit anderen Worten wird also insbesondere zumindest ein Teil einer Wandung von einem bewegbaren Kolben gebildet. Wie bereits mit Bezug auf die fluidkommunizierende Verbindung zwischen Brennkammer und Arbeitskammer erläutert worden ist, kann die fluidkommunizierende Verbindung zwischen Pufferkammer und Arbeitskammer in unterschiedlichster Weise ausgebildet sein. Als einfachste Möglichkeit ist eine Öffnung zwischen diesen beiden Kammern denkbar. Jedoch ist es auch möglich, dass über Kanäle eine fluidkommunizierende Verbindung zwischen Pufferkammer und Arbeitskammer hergestellt wird. Auch das Vorsehen von Ventilen, beispielsweise Überdruckventilen, oder aber auch von düsenförmigen Einrichtungen im Bereich des Auslasses zur Arbeitskammer sind im Rahmen der vorliegenden Erfindung denkbar. Das in der Pufferkammer enthaltene Gas wird sich demnach weiter in der Arbeitskammer ausdehnen, wobei die Ausdehnungsgeschwindigkeit nicht zuletzt von der fluidkommunizierenden Verbindung abhängt. Insbesondere die Geometrie der fluidkommunizierenden Verbindung und der damit einhergehende Druckverlust, beziehungsweise Geschwindigkeitsverlust beim Übergang des sich aufbauenden Überdrucks in der Pufferkammer auf die Arbeitskammer, sind hier von entscheidender Relevanz. Steigt in der Arbeitskammer der Druck an, so ist der Teil der Wandung, der als beweglicher Kolben ausgeführt ist, in der Lage das Volumen der Arbeitskammer zu variieren. Nimmt also der Innendruck in der Arbeitskammer zu, so wird sich der bewegliche Kolben in eine Richtung bewegen, welche diesem Druck ausweicht, also das Volumen der Arbeitskammer vergrößern. Damit wird die Zunahme des Innendruckes in der Arbeitskammer ab einem erreichten Mindestdruck, zum Beispiel einem Druckverhältnis von Arbeitskammer zu Pufferkammer von 3:1,im Wesentlichen gestoppt, so dass das nachströmende Gas nicht den Druck erhöht, sondern die Expansion der Arbeitskammer weiter voranschreiten lässt.

Bei einer erfindungsgemäßen Sicherung ist darüber hinaus eine Abtriebsvorrichtung vorgesehen, die mit dem bewegbaren Kolben kraftschlüssig und/oder drehmomentschlüssig verbunden ist. Bei der Abtriebsvorrichtung handelt es sich also um eine Art mechanischen Ausgang aus der Sicherheitseinrichtung, welcher als Schnittstelle für die von der pyrotechnischen Ladung zur Verfügung gestellte Kraft dienen kann. Die Abtriebsvorrichtung kann dabei in unterschiedlichen Einsatzsituationen direkt auf gewünschte Objekte, wie beispielsweise die Tür oder Klappe wirken. Auch ein zwischengeschaltetes Getriebe, wie beispielsweise Getriebeverzahnungen oder aber auch Hebelkinematiken, die mit der Abtriebsvorrichtung gekoppelt sind und auf diese Weise eine Übertragung auf eine Tür oder Klappe ermöglichen, sind denkbar.

Nachfolgend soll die Funktionsweise bei der Auslösung einer erfindungsgemäßen Sicherheitseinrichtung erläutert werden.

Für den Fall, dass eine erfindungsgemäße Sicherheitseinrichtung ausgelöst wird, erfolgt ein Signal an die Anzündvorrichtung. Auf dieses Signal hin zündet die Anzündvorrichtung die pyrotechnische Ladung an, welche im Wesentlichen explosionsartig verbrennt. Das explosionsartige Verbrennen führt zu einem rapiden Anstieg des Innendrucks in der Brennkammer, welcher durch das durch die Verbrennung der pyrotechnischen Ladung entstehende Gas entsteht. Über die fluidkommunizierende Verbindung zwischen Brennkammer und Pufferkammer kann das entstehende Gas aus der Brennkammer in die Pufferkammer entweichen.

Da jedoch die Gasentstehung und dadurch auch die Druckerhöhung durch das Verbrennen der pyrotechnischen Ladung im Wesentlichen explosionsartig erfolgt, kann über die fluidkommunizierende Verbindung, beispielsweise in Form eines Kanals oder einer Öffnung, diese Druckerhöhung nicht explosionsartig an die Pufferkammer weitergegeben werden. Vielmehr wird das Gas und damit auch der hohe Druck aus der Brennkammer über einen gewissen Zeitraum in die Pufferkammer hinüberströmen und die Gasaufnahme, beziehungsweise die Druckerhöhung in der Pufferkammer langsamer erfolgen, als dies in der Brennkammer der Fall ist. Die fluidkommunizierende Verbindung zwischen der Brennkammer und der Pufferkammer dient also zum Abbremsen der Ausbreitung des durch die Verbrennung der pyrotechnischen Ladung entstehenden Gases.

Gleichzeitig befindet sich die Pufferkammer auch in fluidkommunizierender Verbindung mit der Arbeitskammer. Auch diese fluidkommunizierende Verbindung ist nicht in der Lage einen explosionsartigen Anstieg eines Drucks in der Pufferkammer ohne wesentliche Zeitverzögerung weiterzugeben. Je nach Geometrie der fluidkommunizierenden Verbindung zwischen Pufferkammer und Arbeitskammer, also beispielsweise eines Kanals, einer Öffnung, einer Düse oder eines Ventils, tritt auch hier eine Zeitverzögerung ein. Die Arbeitskammer wird also ebenfalls von dem durch die Verbrennung der pyrotechnischen Ladung erzeugten Druck erreicht, jedoch einerseits unter einer Zeitverzögerung durch die fluidkommunizierenden Verbindungen zwischen Brennkammer und Pufferkammer sowie zwischen Pufferkammer und Arbeitskammer, wie auch durch eine Streckung der Druckerhöhung. Während die Druckerhöhung in der Brennkammer noch explosionsartig erfolgt, wird die Druckerhöhung in der Pufferkammer bereits deutlich langsamer erfolgen und nachfolgende Druckerhöhungen in der Arbeitskammer um einen weiteren Faktor verlangsamt durchgeführt werden. Der bewegbare Kolben der Wandung der Arbeitskammer, wird also der langsamen Erhöhung des Drucks, bzw. des langsamen Einströmens des Gases in der Arbeitskammer entsprechend langsam folgen und das Volumen der Arbeitskammer entsprechend langsam vergrößern.

Mit anderen Worten wird damit die explosionsartige Geschwindigkeit der Druckerhöhung durch die Verbrennung der pyrotechnischen Ladung in der Brennkammer ohne jegliche mechanische Komponente, ausschließlich durch das Vorsehen einer Pufferkammer und einer Arbeitskammer und der entsprechenden fluidkommunizierenden Verbindung in eine deutlich langsamere Bewegung des bewegbaren Kolbens übersetzt. Durch die Kopplung des bewegbaren Kolbens mit der Abtriebsvorrichtung in kraftschlüssiger und/oder in drehmomentschlüssiger Weise wird damit auch einem Abtrieb eine deutlich langsamere Bewegung ermöglicht, als durch das explosionsartige Verbrennen der pyrotechnischen Ladung zur Verfügung gestellt wird.

Bei der pyrotechnischen Ladung kommen dabei insbesondere besonders kleine Mengen zum Einsatz, beispielsweise 25 bis 35 Gramm, welche mit sehr hohen Temperaturen, insbesondere bis zu 2000° Celsius verbrennen. Die geringe Menge hat den Vorteil, dass ein sehr geringes Eigengewicht einer erfindungsgemäßen Sicherheitseinrichtung zu erzielen ist. Durch die sehr hohen Temperaturen ist jedoch eine ausreichende Temperaturstabilität, insbesondere mit Bezug auf schnelle Temperaturänderungen, bei der Materialwahl für die Brennkammer aber auch für die weiteren Komponenten, insbesondere Pufferkammer und Arbeitskammer sowie bewegbarer Kolben zu bedenken. Durch das Verwenden einer erfindungsgemäßen Sicherheitseinrichtung verlangsamt sich die Aktivierungszeit, die an der Abtriebsvorrichtung für die Notöffnung und/oder Klappe zur Verfügung gestellten vom explosionsartigen Verbrennen der pyrotechnischen Ladung im Bereich zwischen 5 und 20 Millisekunden, auf eine gewünschte Öffnungszeit durch die Bewegung der Abtriebsvorrichtung im Bereich zwischen 1 und 5 Sekunden.

Die Reduktion der Öffnungszeit hat den Vorteil, dass die mechanischen Komponenten der Tür, insbesondere mechanische Komponenten, die der Abtriebsvorrichtung der Sicherheitseinrichtung nachgeordnet sind, nicht übermäßig belastet werden. Üblicherweise sind solche Türen für Maximalkräfte ausgelegt. Eine Erhöhung dieser Maximalkräfte würde mit einem konstruktiven Aufwand insbesondere mit stärkeren und damit teureren Materialien und auch mit einem höheren Gewicht der entsprechenden Komponenten einhergehen. Durch die entsprechende Dimensionierung einer erfindungsgemäßen Sicherheitseinrichtung kann sichergestellt werden, dass die maximal von der Abtriebsvorrichtung zur Verfügung gestellte Kraft auf einen Wert begrenzt ist, der unterhalb der Belastungsgrenze der mechanischen Komponenten liegt, die der Abtriebsvorrichtung nachgeordnet sind. Man kann die Kombination aus Brennkammer, Pufferkammer und Arbeitskammer und den dazwischen liegenden fluidkommunizierenden Verbindungen demnach auch als pneumatische Übersetzung oder pneumatisches Getriebe verstehen. Auf diese Weise ist die Öffnungszeit und die maximale Belastbarkeit so einstellbar, dass mit im Wesentlichen standardisierten, also bereits vorhandenen Türen und/oder Klappen gearbeitet werden kann, und trotzdem die geforderten sehr schnellen Öffnungszeiten für die Türöffnung im Notfall unterboten werden. Eine erfindungsgemäße Pufferkammer hat beispielsweise ein Volumen von bis zu ungefähr einem Liter. Damit übersteigt das Volumen der Pufferkammer das Volumen der Brennkammer um ein Vielfaches, insbesondere um das 20-fache-.

Um sicherzustellen, dass Feststoffe, insbesondere Rückstände aus der Verbrennung der pyrotechnischen Ladung aus der Brennkammer nicht in die Pufferkammer und vor allem nicht in die Arbeitskammer gelangen können, kann es von Vorteil sein, wenn in der fluidkommunizierenden Verbindung zwischen der Brennkammer und der Pufferkammer und/oder zwischen der Pufferkammer und der Arbeitskammer ein Filter vorgesehen ist, der einen Übergang solcher Feststoffe verhindert. Auch kann es vorteilhaft sein, wenn in einer zweiten Brennkammer oder aber auch in der bereits bestehenden Brennkammer eine weitere insbesondere eine zweite pyrotechnische Ladung vorgesehen ist, welche nach der ersten pyrotechnischen Ladung gezündet wird. Insbesondere wird die zweite pyrotechnische Ladung zu einem Zeitpunkt gezündet, zu welchem sich die gewünschte Türöffnung in der Notsituation im letzten Drittel der Öffnungsphase befindet. Durch das verlangsamte Überströmen des Gases aus der Brennkammer sinkt demnach am Ende der Öffnungsphase über die Abtriebsvorrichtung der Druck im Inneren der Arbeitskammer über die Dauer des Öffnungsvorgangs zumindest im letzten Drittel ab. Um sicherzustellen, dass auch in diesem letzten Öffnungsdrittel einer Tür noch ausreichend Druck für die Bewegung der Tür in die vollständige Öffnungsphase, insbesondere nach einem Öffnungsweg von bis zu 135°, zur Verfügung steht, kann die zweite pyrotechnische Ladung dazu dienen, mittels einer Nachzündung genau diesen fehlenden Druck zur Verfügung zu stellen. Mit anderen Worten dient die zweite pyrotechnische Ladung dazu zu einem Zeitpunkt, zu welchem der Druck der ersten pyrotechnischen Ladung bereits absinkt, diesen sozusagen zu ergänzen und die notwendige Kraft für die letzte Phase einer Öffnung einer Tür zur Verfügung zu stellen. Insbesondere bei schweren Türen, oder bei langsamen Öffnungszeiten oder aber auch bei weiten Türöffnungswegen, kann eine derartige Ausführungsform von Vorteil sein.

Weiter kann es vorteilhaft sein, wenn im Rahmen der vorliegenden Erfindung bei einer Sicherheitseinrichtung in der fluidkommunizierenden Verbindung zwischen der Pufferkammer und der Arbeitskammer eine Druckminderungsvorrichtung derart angeordnet ist, dass eine Druckminderung in Strömungsrichtung von der Pufferkammer zu der Arbeitskammer erfolgen kann. Eine solche Druckminderungsvorrichtung ist beispielsweise als Drossel, oder als Ventil oder aber auch als Düse ausgeführt. Die Druckminderungsvorrichtung hat insbesondere die Aufgabe in definierter Weise den Übergang von Gas aus der Pufferkammer in die Arbeitskammer zu steuern. Diese Steuerung ist dabei insbesondere auf die Geschwindigkeit mit welcher ein Druckausgleich zwischen den beiden Kammern, also der Pufferkammer und der Arbeitskammer erfolgen kann, zu verstehen.

Das Verwenden einer Düse hat darüber hinaus den Vorteil, dass zwischen der Pufferkammer und der Arbeitskammer eine Überschallsituation im quasi stationären Zustand des Überströmens von der Pufferkammer in die Arbeitskammer einstellbar ist. Ein solch quasi stationärer Zustand mit erzeugter Überschallsituation ermöglicht dabei einen variablen Massenstrom bei konstantem Volumenstrom unabhängig vom Druck in der Pufferkammer. Also wird auf diese Weise durch die Verwendung einer Düse in konstanter Weise ein Druckanstieg in der Arbeitskammer erfolgen, bzw. eine im Wesentlichen konstante Expansion des Volumens der Arbeitskammer, unabhängig davon, ob in der Pufferkammer noch ein Anstieg des Druckes erfolgt, oder bereits der Maximaldruck der Pufferkammer überschritten wurde und ein Abnehmen des Druckes stattfindet.

In einem überwiegenden Teil der Funktionsphase einer erfindungsgemäßen Sicherheitseinrichtung wird demnach die Druckerhöhung in der Arbeitskammer beziehungsweise das Überströmen des Gases in die Arbeitskammer konstant sein, sodass damit auch die Bewegung des bewegbaren Kolbens zum Ausgleich über die Variation des Volumens der Arbeitskammer im Wesentlichen konstant bleibt. Auf diese Weise ist es möglich, dass ein im Wesentlichen konstanter Abtrieb über einen weiten Teil der Notöffnung der Tür an der Abtriebsvorrichtung zur Verfügung gestellt wird. Insbesondere kann auf diese Weise mithilfe der Düse ein Verhältnis der Drücke eingestellt werden, für welches gilt, "Druck in der Pufferkammer" : "Druck in der Arbeitskammer" = 3:1. Bei einem derartigem Druckverhältnis stellt sich insbesondere eine voranstehend erläuterte Überschallsituation ein, die ein quasi stationären Zustand mit den entsprechenden Vorteilen mit sich bringt.

Auch kann es vorteilhaft sein, wenn bei einer erfindungsgemäßen Sicherheitseinrichtung eine Entlüftungsvorrichtung für die Arbeitskammer vorgesehen ist, die eine fluidkommunizierende Verbindung zwischen der Arbeitskammer und der Umgebung der Sicherheitseinrichtung herstellt. Innerhalb dieser Entlüftungsvorrichtung ist dabei vorteilhafterweise ein Überdruckventil angeordnet, um den Druck in der Arbeitskammer auf einen Maximaldruck zu begrenzen. Eine solche Entlüftungsvorrichtung insbesondere mit Überdruckventil hat den Vorteil, dass eine Zerstörung der Arbeitskammer und des bewegbaren Kolbens vermieden wird. Darüber hinaus wird sichergestellt, dass auch bei einem Defekt der Sicherheitseinrichtung die für die Abtriebsvorrichtung zur Verfügung gestellte Kraft durch die Begrenzung des Druckes in der Arbeitskammer mithilfe eines Überdruckventils, auf einen Maximalwert begrenzt wird. Mit anderen Worten ist es auf diese Weise möglich, dass die Maximalwerte für die Belastbarkeit von Türen und/oder Klappen in doppelter Sicherheit, nämlich zum einen durch die Konstruktion der fluidkommunizierenden Verbindungen zwischen den einzelnen Kammern, und zum anderen durch das Vorsehen einer Entlüftungsvorrichtung mit Überdruckventilen, eingehalten werden. Insbesondere dient die Entlüftungsvorrichtung somit auch zur zumindest temporären Erreichung des Verhältnisses 3:1 des Druckes in der Pufferkammer zum Druck in der Arbeitskammer

Die Entlüftung hat den weiteren Vorteil, dass auf diese Weise auch eine Öffnung der Tür, wie gefordert besonderes schnell nach dem Notöffnen, möglich ist. Durch ein Öffnen der Tür wird eine umgekehrte Bewegung über die Abtriebsvorrichtung an den bewegbaren Kolben weitergeleitet. Dieser bewegt sich also in einer Richtung, die das Volumen der Arbeitskammer reduziert. Damit würde sich in der Arbeitskammer ein Druck aufbauen, der die Bewegung des bewegbaren Kolbens und damit über die Abtriebsvorrichtung auch der Bewegung der Tür in die verschließende Position entgegenwirkt. Um also zu verhindern, dass auf diese Weise ein Verschließen der Tür unmöglich wird, kann durch die Entlüftungsvorrichtung zumindest ab einem vorher definierten Überdruck des Überdruckventils der Druck aus der Arbeitskammer entweichen, sodass zumindest ab diesem Überdruck ein nachfolgendes weiteres vollständiges Verschließen der Tür möglich wird.

Das Drosselventil, beziehungsweise das Überdruckventil, ist vorteilhafterweise auf einen Druck zwischen 60-95 bar als Maximalwert eingestellt. Auf diese Weise kann vorteilhafterweise das maximale Drehmoment, welches für die Abtriebsvorrichtung zur Verfügung gestellt wird, auf einen Wert von unter 1000 Nm begrenzt werden.

Es kann vorteilhaft sein, insbesondere mit Bezug auf die notwendige Verschlussfähigkeit der Tür nach dem Notöffnen, dass die Entlüftungsvorrichtung eine Einrichtung aufweist, mithilfe derer das Überdruckventil nach dem Öffnen überbrückt wird, und auch in einem überbrückten Zustand verbleibt. Die Entlüftung erfolgt also unter Umgehung des Überdruckventils, entweder an die Umgebung und/oder auch in die Pufferkammer. Das Entlüften verhindert somit, dass bei einer Bewegung des bewegbaren Kolbens in einer Richtung, welche das Volumen der Arbeitskammer reduziert ein Druck in dieser Arbeitskammer aufgebaut wird. Da ein solcher Druck der Türöffnung über die Abtriebsvorrichtung entgegenwirken würde, wirkt eine entsprechend ausgestaltete Entlüftungsvorrichtung auf ein noch leichteres Verschließen nach dem Öffnen hin.

Ein weiterer Vorteil ist es, wenn bei einer erfindungsgemäßen Sicherheitseinrichtung eine Steuervorrichtung für die Entlüftungsvorrichtung vorgesehen ist, die mit dem bewegbaren Kolben derart verbunden ist, dass bei der Bewegung des bewegbaren Kolbens zur Vergrößerung des Volumens der Arbeitskammer die Steuervorrichtung mit bewegt wird, sodass an einer vorbestimmten Position des bewegbaren Kolbens die Entlüftungsvorrichtung die Arbeitskammer zur Pufferkammer und/oder unter Umgehung des Überdruckventils zur Umgebung der Sicherheitseinrichtung entlüftet.

Eine solche Überbrückung kann also beispielsweise mithilfe einer Steuerscheibe ausgebildet werden, welche sich gemeinsam mit dem bewegbaren Kolben bewegt. Der bewegbare Kolben weist in so einem Fall ein Mitnehmerteil auf, welches die Steuerscheibe in der Richtung des bewegbaren Kolbens mitnimmt, in welcher dieser das Volumen der Arbeitskammer vergrößert. Bewegt sich der bewegbare Kolben in die entgegengesetzte Richtung, also in Richtung einer Verkleinerung des Volumens der Arbeitskammer, so wird die Steuerscheibe von dem bewegbaren Kolben entkoppelt, und verbleibt in der finalen Position. Die Kopplung zwischen Steuerscheibe und bewegbarem Kolben kann also als Kopplung mit Freilauf in Richtung der Reduktion des Volumens der Arbeitskammer bezeichnet werden. Die finale Position der Steuerscheibe ist vorteilhafterweise eine Entlüftungsposition, in der entweder das Überbrückungsventil mechanisch freigegeben wird, oder aber eine zusätzliche Öffnung geöffnet wird, welche einen Überbrückungskanal zwischen der Arbeitskammer und der Umgebung und/oder zwischen der Arbeitskammer und der Pufferkammer freigibt. Da die Steuerscheibe in der finalen Position verbleibt; bleiben auch die Überbrückungskanäle in einer freigegebenen Position, sodass trotz einer Bewegung des bewegbaren Kolbens in einer volumenverkleinernden Richtung der Arbeitskammer offen bleiben. Damit wird auch beim Verschließen der Tür durch das entsprechende Mitbewegen des bewegbaren Kolbens, kein Überdruck in der Arbeitskammer aufgebaut, welcher ansonsten den Schließvorgang der Tür behindern könnte. Darüber hinaus kann der restliche Überdruck aus der Pufferkammer entweichen.

Auch kann es vorteilhaft sein, wenn bei einer erfindungsgemäßen Sicherheitseinrichtung der bewegbare Kolben zur Arbeitskammer hin mit einer Dichtung abgedichtet ist. Eine solche Dichtung ist vorteilhaft, da auf diese Weise ein Druckverlust während der Bewegung des bewegbaren Kolbens in die volumenvergrößernde Richtung der Arbeitskammer vermieden wird. Die Vermeidung dieses Druckverlustes ermöglicht es, eine exakte Vorabdefinition der Masse der pyrotechnischen Ladung zu leisten, und damit zu verhindern, dass unnötig große Druckverluste über eine fehlende Abdichtung des bewegbaren Kolbens entstehen. Darüber hinaus ist die Arbeitskammer selbstverständlich auch an allen weiteren Stößen zwischen den einzelnen Komponenten vorteilhafterweise abgedichtet. Die Dichtung am bewegbaren Kolben kann dabei insbesondere derart ausgeführt sein, dass sie durch den Innendruck in der Arbeitskammer eine Kraftrichtung erfährt, die im Wesentlichen mit der Kraftrichtung der Dichtwirkung, also der Dichtrichtung selbst, gleichgerichtet ist. Mit anderen Worten dient also die Druckerhöhung in der Arbeitskammer dazu die Dichtkraft einer solchen Dichtung zu erhöhen.

Auch vorteilhaft ist es, wenn bei einer erfindungsgemäßen Sicherheitseinrichtung die Dichtung den bewegbaren Kolben zumindest umlaufend entlang der feststehenden Wandungen der Arbeitskammer mit Dichtlippen aufweist, die in einem spitzen Winkel von der der Arbeitskammer zugewandten Wandung des bewegbaren Kolbens abstehen und die feststehenden Wandungen der Arbeitskammer berühren. Das Vorsehen eines derart spitzen Winkels hat den voranstehend beschriebenen Effekt, dass eine Druckerhöhung im Inneren der Arbeitskammer eine Erhöhung der Dichtkraft an der Dichtung bewirkt. Mit anderen Worten werden die Dichtlippen durch einen erhöhten Druck in der Arbeitskammer in Ihrer Dichtrichtung gestärkt und gegen die feststehenden Wandungen der Arbeitskammer gedrückt. Auf diese Weise wird die Dichtung verstärkt, ohne dass konstruktiv in das Dichtmaterial oder in die Dichtmaterialstärke eingegriffen werden muss. Selbstverständlich ist es auch möglich, dass eine flächige Dichtung verwendet wird, die im Wesentlichen die gesamte Wandung des bewegbaren Kolbens abdeckt. Dies ist insbesondere dann vorteilhaft, wenn es auf einen schnellen und zügigen Einbau bei der Montage der Dichtung ankommt. Das Verwenden einer flächigen Dichtung hat den Vorteil, dass über eine oder mehrere zentrale Fixierpositionen die Dichtung an dem bewegbaren Kolben angebracht werden kann, sodass eine exakte Ausrichtung der Dichtlippen entlang der Wandung des bewegbaren Kolbens nicht erfolgen muss. Auch kann auf diese Weise eine Bewegung des Kolbens im Normalbetrieb der Tür oder der Klappe ermöglicht werden, da die Dichtung ohne Druck in der Arbeitskammer weniger oder gar nicht durch eine Dichtkraft belastet sind. Damit wird der Verschleiß der Dichtungen im Normalbetrieb trotz einer ständigen Bewegung des bewegbaren Kolbens auf ein Minimum reduziert.

Ein weiterer Vorteil kann es sein, wenn im Rahmen der vorliegenden Erfindung eine Sicherheitseinrichtung derart ausgestattet ist, dass es sich bei dem bewegbaren Kolben um einen Drehkolben handelt, der mit der Abtriebsvorrichtung in Form einer Abtriebswelle drehmomentschlüssig verbunden ist. Der Drehkolben folgt dabei einer gekrümmten Bahn, insbesondere einer Kreisbahn. Damit weisen auch die Wandungen der Arbeitskammer zumindest teilweise eine gekrümmte Form auf, welche der Bewegungsbahn des bewegbaren Kolbens folgt. Der Vorteil der Verwendung eines Drehkolbens, welcher drehmomentschlüssig mit einer Abtriebswelle verbunden ist, ist es, dass an der Abtriebswelle direkt ein Drehmoment zur Verfügung gestellt wird. Da üblicherweise für die Öffnung von Türen eine Drehbewegung notwendig ist, insbesondere diese Türen über einfache Gelenke oder Mehrgelenksysteme an dem Luftfahrzeug angelenkt sind, kann durch das Vorsehen einer Abtriebsvorrichtung in Form einer Abtriebswelle eine direkte Kontaktierung unter Vermeidung zusätzlicher Getriebe zwischen Sicherheitseinrichtung und einer solchen Lagerkinematik erfolgen. Mit anderen Worten wird auf diese Weise die bestehende Lagerung der Tür und/oder Klappe in Doppelfunktion auch für die Sicherheitseinrichtung und deren Öffnungsfunktionalität verwendet. Auf diese Weise können zusätzliche Getriebe eingespart werden, was neben einer Reduktion der Kosten auch eine Gewichtseinsparung mit sich bringt.

Auch von Vorteil kann es sein, wenn bei einer erfindungsgemäßen Sicherheitseinrichtung ein Dämpfungssystem für die Bewegung des bewegbaren Kolbens vorgesehen ist. Ein solches Dämpfungssystem kann alternativ oder zusätzlich zu einer Entlüftungsvorrichtung, wie weiter oben beschrieben, vorgesehen sein. Sie hat den Vorteil, dass auf diese Weise ebenfalls sichergestellt wird, dass eine maximale Abtriebskraft an der Abtriebsvorrichtung nicht überschritten wird. Darüber hinaus hat die Dämpfung zur Folge, dass die Türöffnung selbst in einer gedämpften Weise erfolgt. Insbesondere mit Bezug auf das Ende der Öffnungsbewegung der Notöffnung der Tür und/oder der Klappe ist dies von großem Vorteil, da auf diese Weise ein hartes Anschlagen der Tür an der Außenseite des Luftfahrzeugs und ein damit möglicherweise verbundenes Beschädigen der Tür, des Luftfahrzeugs oder aber auch der Öffnungsmechanik der Tür, verhindert werden kann.

Ein weiterer Vorteil ist, wenn im Rahmen der vorliegenden Erfindung das Dämpfungssystem eine Dämpfungskammer aufweist, von deren Wandungen zumindest eine abschnittsweise derart von dem bewegbaren Kolben gebildet wird, dass eine Bewegung des bewegbaren Kolbens zur Vergrößerung des Volumens der Arbeitskammer das Volumen der Dämpfungskammer verkleinert, und dass die Dämpfungskammer mit einem Dämpfungsdrosselventil in fluidkommunizierender Verbindung steht, über das ein in der Dämpfungskammer enthaltenes Fluid abführbar ist. Im einfachsten Fall bildet also die Dämpfungskammer die Rückseite des bewegbaren Kolbens mit Bezug zur Arbeitskammer. Der bewegbare Kolben bewegt sich also für die Vergrößerung der Arbeitskammer gleichzeitig in einer Richtung, in welcher die Dämpfungskammer verkleinert wird. Dabei kann in der Dämpfungskammer beispielsweise ein Gas, insbesondere Luft, als Dämpfungsfluid vorhanden sein. Auch andere Fluide, insbesondere Flüssigkeiten, wie beispielsweise Öle oder Hydraulikflüssigkeiten sind möglich, um durch ein definiertes Ausströmen eine Dämpfung zu erzielen. Dadurch, dass ein Raum, welcher für die Bewegung des bewegbaren Kolbens zur Vergrößerung der Arbeitskammer auf jeden Fall zur Verfügung stehen muss, zusätzliche Funktionalität, nämlich in Form der Dämpfüngskammer, erhält, kann ohne eine Vergrößerung der konstruktiven Komplexität der vorliegenden Sicherheitseinrichtung eine erweiterte Funktionalität erreicht werden.

Es kann von Vorteil sein, wenn bei einer erfindungsgemäßen Sicherheitseinrichtung der bewegbare Kolben ein Drehkolben mit zumindest zwei Drehflügeln ist. Diese zumindest zwei Drehflügel sind dabei vorteilhafterweise symmetrisch zur Rotationsachse des Drehkolbens angeordnet. Das Vorsehen von zumindest zwei Drehflügeln, die dementsprechend auch mit zumindest zwei Arbeitskammern zusammenwirken, hat den Vorteil, dass insbesondere durch das zur Verfügung stellen eines Momentes an der Abtriebsvorrichtung auf diese Weise ein symmetrisches Abstützen der Momente auf beiden Seiten der Abtriebsvorrichtungen erfolgen kann. Damit ist es möglich, dass auf zusätzliche Abstützungen der Abtriebsvorrichtung verzichtet werden kann, und diese ausschließlich gegen Torsion versteift werden muss. Insbesondere durch die symmetrische Anordnung um eine Rotationsachse des Drehkolbens wird die Abstützung in idealer Weise erreicht, sodass die mechanische Belastung der Abtriebsvorrichtung auf ein Minimum begrenzt wird.

Weiter kann es vorteilhaft sein, wenn bei einer erfindungsgemäßen Sicherheitseinrichtung Dichtungskanäle vorhanden sind, die die Pufferkammer in fluidkommunizierender Weise mit Dichtnuten verbinden, sodass Druck in der Pufferkammer eine Druckkraft auf Dichtungselemente in den Dichtnuten ausüben kann. Mit anderen Worten wird auf diese Weise eine Konstruktion erzielt, welche es ermöglicht, dass in der Vorrichtung vorhandener Druck verwendet wird, um die Dichtkraft der notwendigen Dichtelemente zu erhöhen. Dabei ist darauf hinzuweisen, dass durch die Dichtungskanäle kein Volumenstrom an Fluid strömt, sondern vielmehr nur eine Druckweiterleitung aus dem Innendruck der Pufferkammer an die gewünschten Dichtungspositionen erfolgt. Unter Vernachlässigung der Verluste an den Bereichen der Dichtungselemente resultiert auf diese Weise eine Erhöhung der Dichtung, dies kann insbesondere bei statischen, aber auch bei mit rotierenden Dichtungen eingesetzt werden. Der Druck muss nicht zwangsläufig aus der Pufferkammer kommen, sondern kann alternativ oder parallel auch aus der Arbeitskammer stammen.

Auch kann es von Vorteil sein, wenn bei einer erfindungsgemäßen Sicherheitseinrichtung eine Kupplungsvorrichtung vorgesehen ist, die mit der Abtriebsvorrichtung kraftschlüssig und/oder drehmomentschlüssig verbunden ist, und die derart ausgestaltet ist, dass sie den Kraft- und/oder Drehmomentabtrieb von der Abtriebsvorrichtung nur im Fall der Anzündung der pyrotechnischen Ladung herstellt. Eine solche Kupplung hat den Vorteil, dass der bewegbare Kolben sich während dem Normalbetrieb der Tür und/oder Klappe nicht mitbewegt. Vielmehr entkoppelt die Kupplung den Normalbetrieb der Tür und/oder Klappe von der Bewegbarkeit des bewegbaren Kolbens. Auf diese Weise wird verhindert, dass durch eine ständige Bewegung des bewegbaren Kolbens in der Arbeitskammer ein Verschleiß des bewegbaren Kolbens und/oder der entsprechenden Dichtungen erfolgt. Auf diese Weise wird verhindert, dass während des Normalbetriebs durch den Verschleiß die Funktionalität und damit die Sicherheit im Notfall beeinträchtigt werden. Auf eine solche Kupplung kann jedoch verzichtet werden, wenn die Dichtungen beziehungsweise die Ausführung des bewegbaren Kolbens eine ausreichende Funktionalität über die normale Einsatzdauer aufweist, insbesondere die Kolbendichtung dauerstabil für die regulierenden Türbewegungen ist.

Ein weiterer Gegenstand der vorliegenden Erfindung ist eine Tür oder eine Klappe für ein Luftfahrzeug, aufweisend zumindest eine erfindungsgemäße Sicherheitseinrichtung. Mithilfe einer erfindungsgemäßen Tür und/oder Klappe kann die Vielzahl der Vorteile durch die entsprechenden technischen Merkmale erzielt werden, wie sie ausführlich voranstehend im Bezug auf die erfindungsgemäße Sicherheitseinrichtung beschrieben worden sind.

Die vorliegende Erfindung wird näher erläutert anhand der beigefügten Zeichnungsfiguren. Dabei beziehen sich die verwendeten Begrifflichkeiten "links", "rechts", "oben" und "unten" auf eine Ausrichtung der Zeichnungsfiguren mit normal lesbaren Bezugszeichen. Es zeigen
- Figur 1: im Querschnitt eine Ausführungsform einer erfindungsgemäßen Sicherheitseinrichtung
- Figur 2: in isometrischer Darstellung in aufgeschnittener Form die Sicherheitseinrichtung der Figur 1
- Figur 3: eine weitere Ausführungsform der Sicherheitseinrichtung in isometrischer Darstellung
- Figur 4: eine weitere Ausführungsform der Sicherheitseinrichtung in isometrischer Form
- Figur 5a: im asymmetrischen Querschnitt eine Ausführungsform einer Sicherheitseinrichtung
- Figur 5b: die Sicherheitseinrichtung der Figur 5a in der offenen Draufsicht
- Figur 6: ein Detailausschnitt einer fluidkommunizierenden Verbindung zwischen Pufferkammer und Arbeitskammer einer Ausführungsform der Sicherheitseinrichtung
- Figur 7: eine schematische Darstellung eine bewegbaren Kolbens einer Ausführungsform
- Figur 8: eine Ausführungsform einer statischen Dichtung einer Sicherheitseinrichtung
- Figur 9a: eine Ausführungsform einer Steuerscheibe
- Figur 9b: die Steuerscheibe der Figur 9a in einer weiteren Position
- Figur 9c: die Steuerscheibe der Figur 9a und 9b in einer weiteren Position
- Figur 9d: die Steuerscheibe der Figur 9a bis 9c in einer weiteren Position.

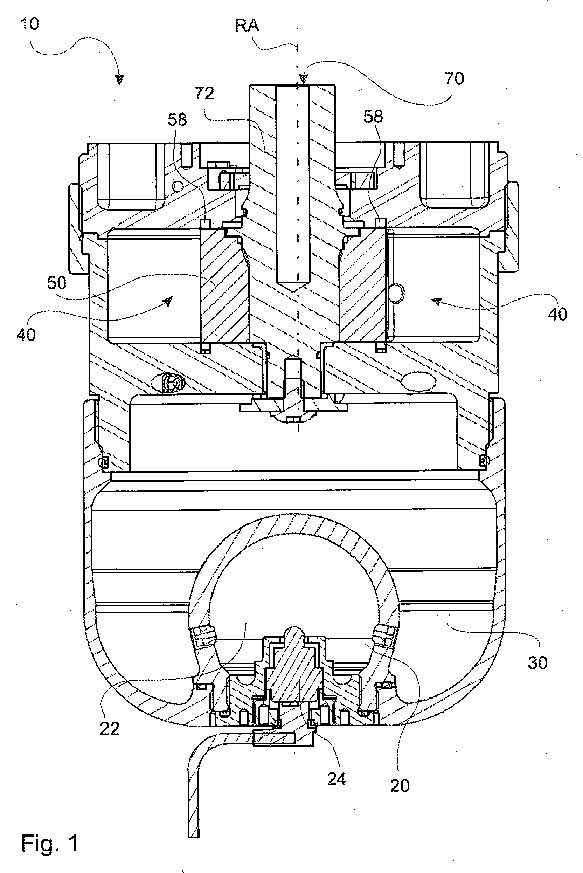

In Figur 1 ist eine erste Ausführungsform einer erfindungsgemäßen Sicherheitseinrichtung 10 dargestellt. In der Darstellung der Figur 1 ist die Sicherheitseinrichtung 10 in geschnittener Form entlang der Rotationsachse RA dargestellt.

Die Sicherheitseinrichtung 10 der Figur 1 weist im unteren Bereich eine im Wesentlichen kugelförmige Brennkammer 20 auf. Die Brennkammer 20 ist mit einer pyrotechnischen Ladung 22 gefüllt, welche über eine Anzündvorrichtung 24 angezündet und zur Verbrennung gebracht werden kann. Die Anzündvorrichtung 24 ist zentral im unteren Bereich der Brennkammer 20 angeordnet, und mit einem Stromanschluss versehen, über welchen die Anzündvorrichtung 24 aufgeheizt werden kann, beziehungsweise ein Zündfunke zum Anzünden der pyrotechnischen Ladung 22 eingebracht werden kann. Um die Brennkammer 20 herum ist eine Pufferkammer 30 vorgesehen, die in ihrem Volumen einem Vielfachen des Volumens der Brennkammer 20 entspricht. Die beiden Kammern 20 und 30 stehen miteinander in fluidkommunizierender Verbindung und zwar über eine Vielzahl von Löchern, die umfänglich in der Brennkammer 20 angeordnet sind. Über diese Vielzahl von Löchern findet ein Druckausgleich zwischen der Brennkammer 20 und der Pufferkammer 30 statt. Dadurch, dass eine Vielzahl von Löchern, ohne weitere drosselnde Einbauten in den Löchern als fluidkommunizierende Verbindung zwischen der Brennkammer 20 und der Pufferkammer 30 vorgesehen ist, wird ein relativ schnelles Überströmen des Gases aus der Brennkammer 20 während der Verbrennung der pyrotechnischen Ladung 22 in die Pufferkammer 30 erfolgen. Auch der Druckanstieg in der Pufferkammer 30 wird relativ zügig nach dem Druckanstieg in der Brennkammer 20 erfolgen. Mit anderen Worten ist die Zeitverzögerung durch eine derart ausgebildete fluidkommunizierende Verbindung zwischen Brennkammer 20 und Pufferkammer 30 relativ gering. Ein ähnlicher Effekt könnte auch mit weniger Öffnungen erzielt werden, die einen noch größeren Öffnungsquerschnitt aufweisen.

Die Pufferkammer 30 wiederum steht in fluidkommunizierender Verbindung mit bei dieser Ausführungsform zwei Arbeitskammern 40. Diese beiden Arbeitskammern 40 der Ausführungsform der Figur 1 sind im Wesentlichen symmetrisch links und rechts der Rotationsachse RA in der Figur 1 zu erkennen. Die beiden Arbeitskammern 40 sind über Kanäle fluidkommunizierend mit der Pufferkammer 30 verbunden, welche später noch näher erläutert werden. In den Arbeitskammern 40 ist jeweils ein Drehflügel 54 als bewegbarer Kolben 50 angeordnet, welcher jeweils eine Variation des Volumens der Arbeitskammern 40 ermöglicht. Auch zu diesem Drehflügel 54 wird später noch näher Stellung genommen. Jeder dieser Drehflügel 54 der bewegbaren Kolben 50 steht in drehmomentschlüssiger Verbindung mit der Abtriebsvorrichtung 70, die bei dieser Ausführungsform als Abtriebswelle 72 ausgebildet ist. Nachfolgend wird kurz die Funktionalität einer Ausführungsform der Figur 1 erläutert.

Wird über die Anzündvorrichtung 24 ein Zündfunke an oder in der pyrotechnischen Ladung 22 erzeugt, so beginnt in explosionsartiger Weise die Verbrennung derselben. Durch die Verbrennung der pyrotechnischen Ladung 22 entsteht Gas, welches einen Überdruck in der Brennkammer 20 aufbaut. Durch die Öffnungen im Umfang der kugelförmig ausgebildeten Brennkammer 20 kann das Gas in die umliegende Pufferkammer 30 entweichen, so dass sich der Überdruck auch in der Pufferkammer 30 ausbreitet. Die Pufferkammer 30 wiederum kann den in ihr entstehenden Überdruck durch ein Abströmen des Gases in die Arbeitskammern 40 weitergeben, sodass anschließend auch in den beiden Arbeitskammern 40 ein Überdruck entsteht. Durch die Ausbildung der fluidkommunizierenden Verbindung zwischen Pufferkammer 30 und Arbeitskammer 40 in Form eines Kanals dauert jedoch der Übergang des Gases und damit der Druckausgleich zwischen Pufferkammer 30 und der jeweiligen Arbeitskammer 40 deutlich länger als dies zwischen der Brennkammer 20 und der Pufferkammer 30 der Fall ist. Der Druck durch die Verbrennung der pyrotechnischen Ladung 22 kommt also in den Arbeitskammern 40 mit Verspätung an. Nach Erhöhung des Druckes in der Arbeitskammer 40 wird der bewegbare Kolben in eine Richtung geschoben, welcher das Volumen in der Arbeitskammer 40 vergrößert, also dem eingebrachten Druck ausweicht. Durch die Bewegung des bewegbaren Kolbens 50, also der beiden Drehflügel 54 wird ein Drehmoment auf die Abtriebsvorrichtung 70 aufgebracht, sodass die Abtriebswelle 72 in Rotation versetzt wird. An der Abtriebswelle 72 kann dabei beispielsweise ein Getriebe oder aber auch direkt eine Mechanik einer Tür oder einer Klappe eines Luftfahrzeugs angelenkt sein, welche die Notöffnung dieser Tür oder Klappe durchführt.

Um sicherzustellen, dass die von der pyrotechnischen Ladung 22 zur Verfügung gestellte Energie in Form von Überdruck möglichst verlustfrei in eine Drehbewegung in der Abtriebswelle 72 umgesetzt wird, sind eine Vielzahl von Dichtungen vorgesehen. Insbesondere sind dabei in Figur 1 die statischen Dichtungselemente 59 zu erwähnen, welche sich, nicht dargestellt, in den Dichtnuten 58, welche ringförmig um die Abtriebsvorrichtung 70 verlaufen, befinden. Mithilfe dieser Dichtnuten 58 und den darin angeordneten Dichtelementen 59 wird die Arbeitskammer 40 abgedichtet, sodass in diese einströmendes Gas und der damit entstehende Überdruck nur durch die Bewegung des Kolbens 50 abgepuffert werden kann. Die Verlustleistung aus der Energie der pyrotechnischen Ladung 22 bei deren Verbrennung durch Undichtigkeiten des Systems wird damit reduziert.

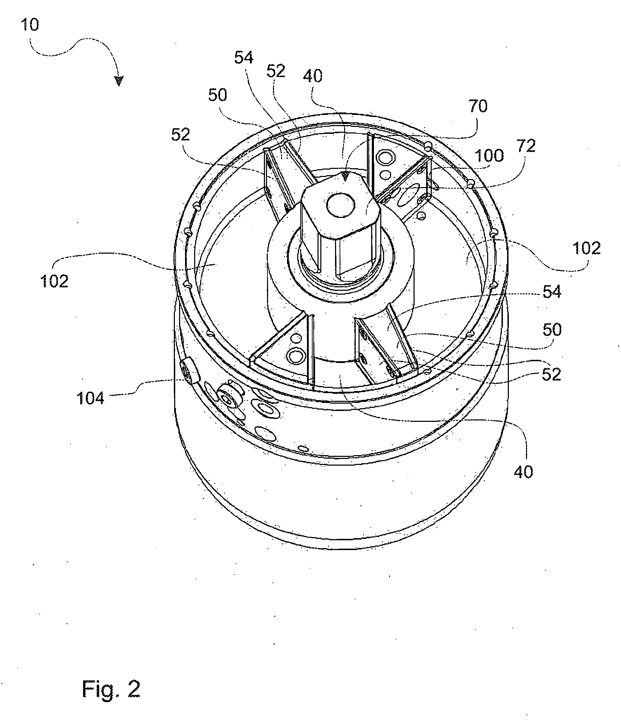

In Figur 2 ist für die weitere detailliertere Beschreibung eine geöffnete Sicherheitseinrichtung 10 der Ausführungsform der Figur 1 in isometrischer Ansicht dargestellt. Bei dieser Ansicht wird ein Blick von oben in die Ausführungsform der Figur 1 geworfen, wobei der Deckel der Sicherheitseinrichtung 10 entfernt ist. Damit sind die beiden Drehflügel 54 der bewegbaren Kolben 50 gut zu erkennen. Diese befinden sich in der Darstellung der Figur 2 in einer Position wie sie zu Beginn des Öffnüngsvorgangs vorliegt, also bereits nach dem Verlassen des Ruhezustandes des bewegbaren Kolbens 50. Mit anderen Worten befindet sich die Arbeitskammer 40 noch in einem relativ kleinen Zustand bezogen auf ihr Volumen. Jedoch hat die Drehbewegung bereits begonnen, und die Vergrößerung des Volumens der Arbeitskammern 40 schreitet durch die Drehbewegung der bewegbaren Kolben 50, also der Drehflügel 54, voran.

Die fluidkommunizierende Verbindung zwischen Pufferkammer 30 und Arbeitskammern 40 ist dabei mittels in dieser Ansicht noch nicht erkennbarer Kanäle ausgeführt, welche aus der Pufferkammer 30 über die als Kuchenstücke ausgeformten statischen Elemente die oben rechts und unten links unterhalb und oberhalb der Abtriebsvorrichtung 70 zu erkennen sind, verlaufen. Durch eine Druckerhöhung in beiden Arbeitskammern 40 wird der Kolben 50, der Drehflügel 54 in Rotation entgegen dem Uhrzeigersinn in Figur 2 bewegt. Damit wird das Volumen der beiden Arbeitskammern 40 gleichmäßig vergrößert. Die entstehende Rotationsbewegung des bewegbaren Kolbens 50 wird dabei auf eine Rotationsbewegung der Abtriebswelle 72 in drehmomentschlüssiger Weise übertragen. Die drehmomentschlüssige Verbindung ist bei dieser Ausbildung über eine Verzahnung zwischen bewegbaren Kolben 50 und Abtriebswelle 72 erzeugt. Allerdings ist auch eine wenigstens teilweise integrale Ausbildung der bewegbaren Kolben 50 mit der Abtriebsvorrichtung 70, insbesondere der Abtriebswelle 72 denkbar. Durch das im Wesentlichen symmetrische Ausbilden der beiden Drehflügel 54 der bewegbaren Kolben 50 um die Abtriebsvorrichtung 70 herum wird sichergestellt, dass das Drehmoment von beiden Seiten im Wesentlichen symmetrisch in die Abtriebsvorrichtung 70 eingeleitet wird. Auf diese Weise muss die Abtriebsvorrichtung 70 nicht zusätzlich abgestützt werden, sondern bei der Konstruktion ausschließlich deren Belastung auf Torsion berücksichtigt werden.

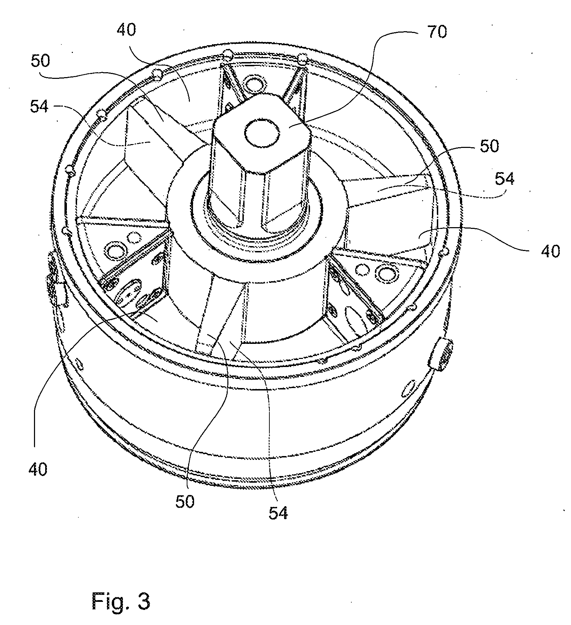

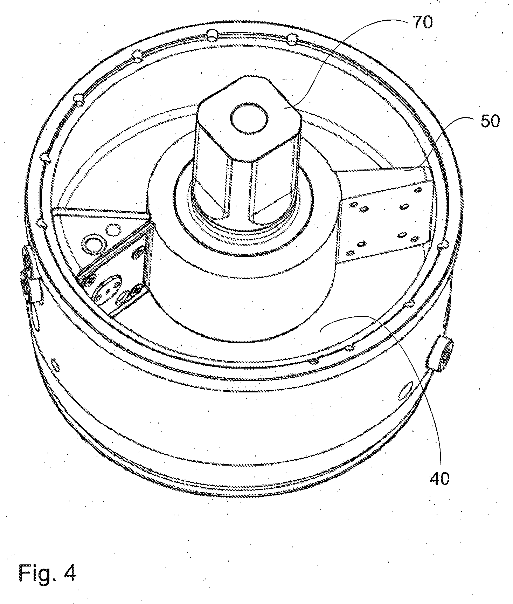

Die Figuren 3 und 4 zeigen Varianten eines bewegbaren Kolbens 50 wie er in der Ausführungsform der Figuren 1 und 2 erläutert worden ist. In Figur 3 ist ebenfalls eine mit Bezug auf die Rotationsachse RA symmetrische Ausführung der Drehkolben 50 dargestellt. Hier sind drei Drehflügel 54 vorgesehen, welche symmetrisch um die Abtriebsvorrichtung 70 und damit um die Rotationsachse RA angeordnet sind. Auch hier folgt in gleicher Weise eine positive Abstützung über die Drehflügel 54 selbst, sodass die Abtriebsvorrichtung 70 nur hinsichtlich der Torsionsbelastung verstärkt werden muss. Durch die mögliche Abstützung über drei bewegbare Kolben 50 ist die Abtriebswelle 72 dieser Ausführungsform noch deutlich stabiler gelagert. Auch ist es möglich durch das Vorsehen von drei oder mehr bewegbaren Kolben 50 die Angriffsfläche für die Druckkraft des Gases in den Arbeitskammer 40 zu vergrößern. Es ist also möglich die gewünschte Kraft auf eine größere Kraftübertragungsfläche zu verteilen, so dass die einzelnen Komponenten, insbesondere die bewegbaren Kolben 50, weniger Stabilität aufweisen müssen und damit einfacher und leichter gebaut sein können.

In Figur 4 ist eine besonders kostengünstige Ausführungsform der Sicherheitseinrichtung 10 dargestellt. Hier ist nur ein einziger Drehflügel 54 als bewegbarer Kolben 50 vorgesehen. Dies hat den großen Vorteil, dass die Variationsmöglichkeit des Volumens der Arbeitskammer 40 einen besonders großen Bereich umfasst. Dieser bezieht sich auf einen Drehwinkelbereich von 0 bis zirka 340°. Ausgespart bleiben muss nur das Kuchenstück, welches zur Aufnahme der fluidkommunizierenden Verbindung zwischen Pufferkammer 30 und Arbeitskammer 40 dient, und die Umfangskomponente des Drehflügels 54. Werden also besonders weite Bewegungen einer Türöffnung oder einer Klappenbewegung benötigt, so kann eine derartige Ausführungsform verwendet werden um auch eine im Wesentlichen fast vollständige Rotationen der Abtriebswelle 72 bis zu 340° zu ermöglichen. Die beiden Ausführungsformen, wie sie in den Figuren 3 und 4 erläutert worden sind, arbeiten beispielsweise mit einer gleichen Korrelation von Brennkammer 30 und Pufferkammer 40 zusammen, wie sie mit Bezug auf die Ausführungsform der Figuren 1 und 2 ausführlich erläutert worden ist.

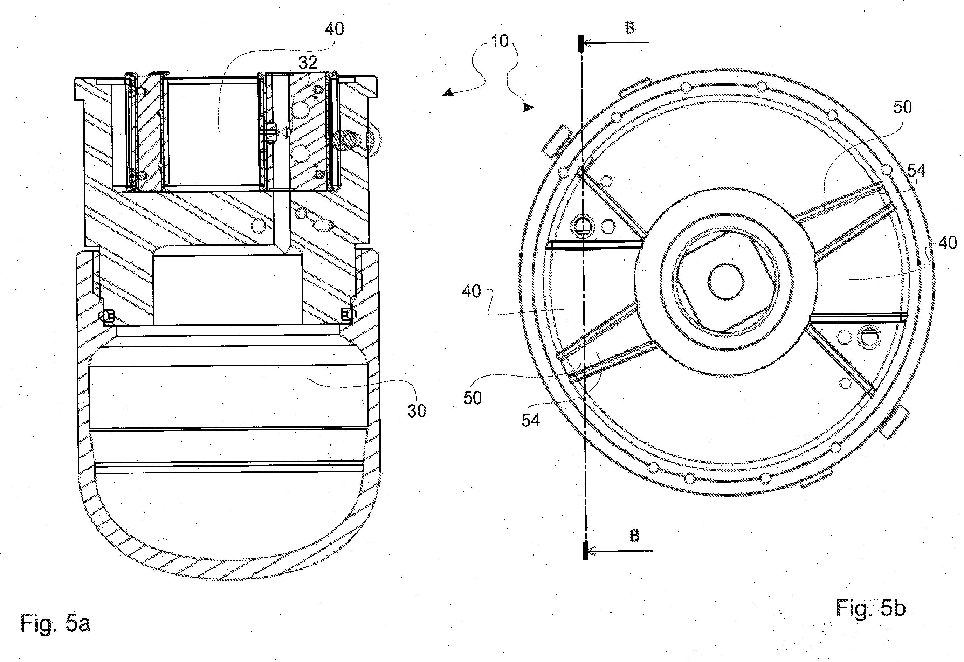

Die Figuren 5a und 5b zeigen eine weitere Orientierung der Ausführungsform in den Figuren 1 und 2 mit Bezug auf die fluidkommunizierende Verbindung zwischen oder Pufferkammer 30 und den Arbeitskammern 40. Hierzu ist entlang der Schnittlinie mit Bezug B-B in Figur 5a ein außerzentrischer Schnitt dargestellt, in weichem die fluidkommunizierende Verbindung zwischen Pufferkammer 30 und Arbeitskammer 40 zu erkennen ist. Diese ist über ein Kanalsystem mit einem senkrechten Kanal verwirklicht. Dieser Kanal öffnet sich in die Arbeitskammer 40, wobei diese Öffnung vorteilhafterweise mit einem Drosselventil, oder aber auch einer Düse ausgestattet, wie sie später noch erläutert wird. Die fluidkommunizierende Verbindung dient also dazu, den steigenden Druck aus der Pufferkammer 30 nicht schlagartig sondern über einen bestimmten Zeitraum definiert an die Arbeitskammer 40 weiterzugeben. So kann also bereits der Kanal der fluidkommunizierenden Verbindung selbst als Druckminderungsvorrichtung 32 verstanden werden. Über den geringeren Querschnitt der fluidkommunizierenden Verbindung zwischen Pufferkammer 30 und Arbeitskammer 40 mit Bezug auf das Volumen der Pufferkammer 30 erfolgt die Reduktion des Übergangs des Innendrucks der Pufferkammer 30. Mit anderen Worten wird auf diese Weise der Vorteil erzielt, dass sich die Zeitdauer, mit welcher ein sich erhöhender Druck in der Pufferkammer 30 in die Arbeitskammer 40 ausbreitet und damit eine Bewegung des bewegbaren Kolbens 50 induziert, verlängert wird. Auf diese Weise kann von der explosionsartigen Verbrennung der pyrotechnischen Ladung 22 sozusagen eine Abbremsung der Übergabe der damit zur Verfügung gestellten Energie mit Bezug auf die Bewegung des bewegbaren Kolbens 50 erzielt werden. Die pyrotechnische Ladung 22 verbrennt dabei insbesondere in besonders kurzem Zeitraum von 5 bis 35 ms, während die Bewegung des bewegbaren Kolbens 50 einen Zeitraum von 1 bis zu maximal 5 Sekunden in Anspruch nehmen kann.

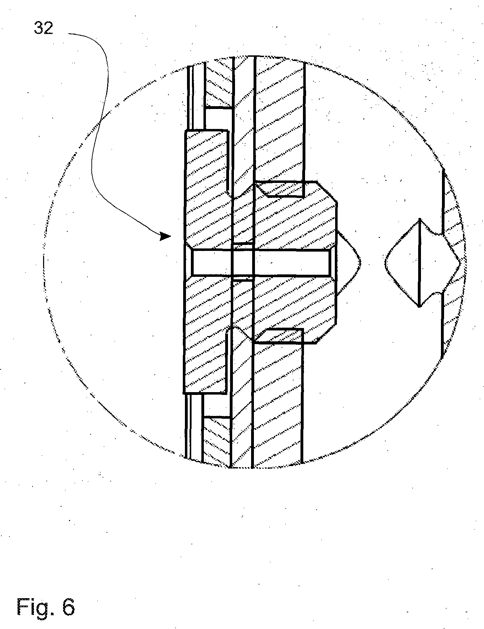

In Figur 6 ist eine Möglichkeit dargestellt, welche eine Drosselung in der fluidkommunizierenden Verbindung zwischen Pufferkammer 30 und Arbeitskammer 40 in definierter Weise ermöglichen kann. Eine derartige Drosselung ist beispielsweise mithilfe einer Druckminderungsvorrichtung 32 erzielbar, welche hier in Form einer Düse ausgebildet ist. Bei der Düse handelt es sich um eine weitere Querschnittverringerung der fluidkommunizierenden Verbindung zwischen Pufferkammer 30 und Arbeitskammer 40, mithilfe derer die Strömungsgeschwindigkeit im Inneren der Düse auf ein Vielfaches erhöht wird. Insbesondere wird durch die Düse der Druckminderungsvorrichtung 32 eine Überschallsituation erzeugt, in welcher im Wesentlichen konstanter Volumenstrom bei variablem Massenstrom zwischen der Pufferkammer 30 und der Arbeitskammer 40 einen im Wesentlichen konstanten Druckanstieg, beziehungsweise eine im Wesentlichen konstante Vergrößerung der Arbeitskammer 40 resultiert.

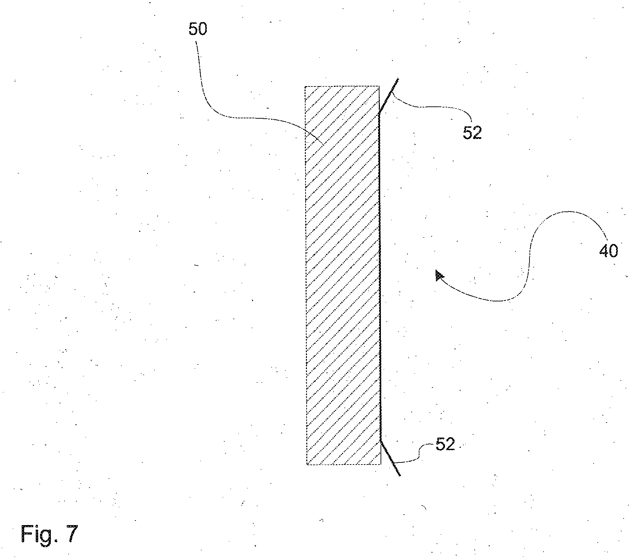

In Figur 7 ist schematisch eine Möglichkeit der Abdichtung des bewegbaren Kolbens 50 dargestellt. Der bewegbare Kolben 50 ist hierfür mit einer umlaufenden Dichtung 52, beziehungsweise mit einer Dichtungsplatte versehen, deren Dichtlippen an den äußeren Enden des bewegbaren Kolbens 50 im spitzen Winkel von diesem abstehen. Wird nun, mit Bezug auf Figur 7 auf der rechten Seite des bewegbaren Kolbens 50 die Arbeitskammer 40 angeordnet, so erzeugt ein erhöhter Druck in diesem Bereich eine Kraftrichtung auf die Dichtlippen der Dichtung 52 in Richtung eines Anklappens an den bewegbaren Kolben 50. Da oberhalb und unterhalb des bewegbaren Kolbens 50 ein Deckel, beziehungsweise eine Bodenplatte vorgesehen ist, wird also die jeweilige Dichtlippe der Dichtung 52 an das entsprechende statische Element also Bodenplatte oder Deckelplatte gedrückt und damit die Dichtkraft verstärkt.

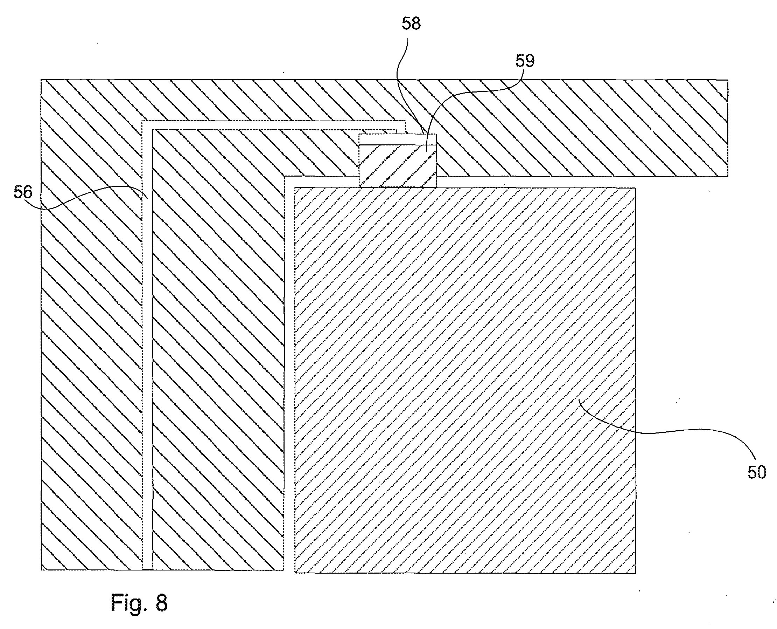

Figur 8 zeigt eine Möglichkeit, um die im System der Sicherheitseinrichtung vorhandenen Überdrücke für die Erhöhung der Dichtkraft auch für statische Dichtungselemente 59 zu verwenden. Dabei zeigt die Figur 8 im Ausschnitt im Querschnitt einer Seite einen rotierbar gelagerten, drehbaren bewegbaren Kolben 50, welcher über eine statische Dichtung in Form eines Dichtelementes 59 abgedichtet werden soll. Das Dichtelement 59 ist statisch in einer Dichtungsnut 58 gelagert. Um nun die notwendige Dichtkraft zwischen dem Dichteleiment 59 und dem bewegbaren Kolben 50 zu erhöhen, ist weiter ein Dichtungskanal 56 vorgesehen, welcher in fluidkommunizierender Verbindung mit der Pufferkammer 30 und/oder mit einer der Arbeitskammern 40 steht. Die dort enthaltenen Drücke werden also über den Dichtungskanal 56 in die Dichtungsnut 58 weitergeleitet und wirkt nun dort in definierter Weise auf das Dichtelement 59. Mit anderen Worten wird das Dichtungselement 59 an den bewegbaren Kolben 50 angedrückt, sodass sich die Dichtkraft erhöht und damit die Dichtigkeit in besserem Maße gewährleistet wird.

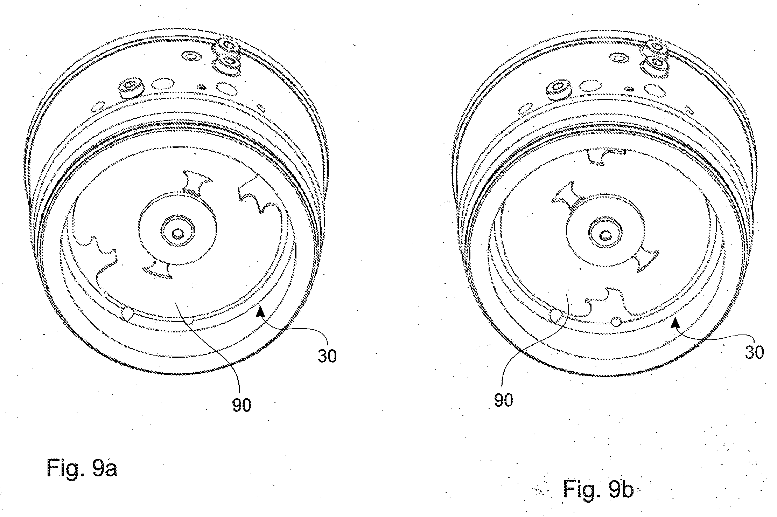

Mit Bezug auf die Figuren 9a bis 9d wird eine Möglichkeit einer Steuerscheibe als Steuervorrichtung 90 beschrieben, welche die Entlüftungsvorrichtung 80 aus der Arbeitskammer 40 freigeben kann. Die Steuerscheibe ist dabei derart mit dem bewegbaren Kolben 50, also mit den beiden Drehflügeln 54 verbunden, dass sie sich in einer Richtung mit dem bewegbaren Kolben 50, also den Drehflügeln 54 mit bewegt, in weicher das Volumen der Arbeitskammern 40 vergrößert wird. In der entgegengesetzten Richtung, also in der verkleinerten Richtung mit Bezug auf die Arbeitskammer 40, entkoppelt die Steuerscheibe, sodass sie in der dann finalen Position verbleibt.

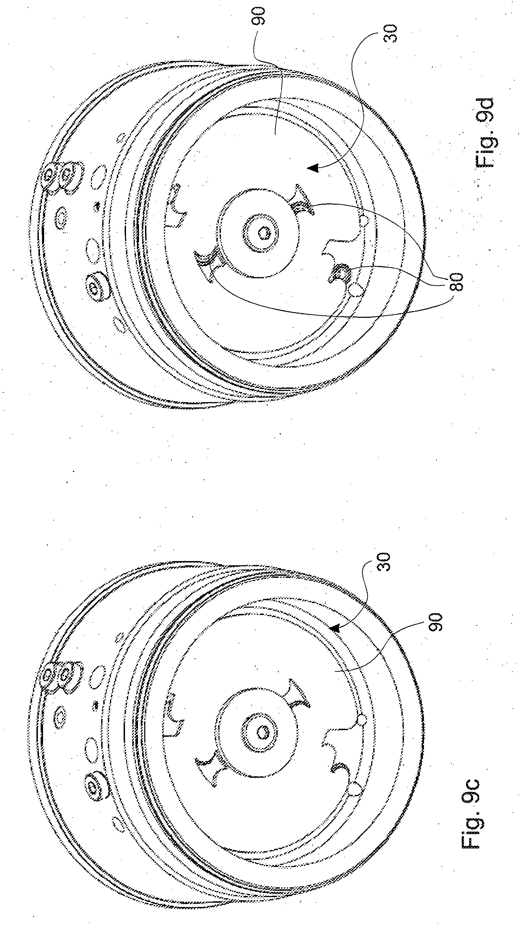

In der Figur 9a bis 9d ist der gesamte Drehvorgang der Steuerscheibe während des Notöffnungsprogramms der Sicherheitseinrichtung 10 dargestellt. Figur 9a zeigt die Startposition an, in welcher die Steuerscheibe mit Bezug auf die Pufferkammer 30 sämtliche Öffnungen verschließt. In Figur 9b hat sich die Steuerscheibe bereits um einen großen Teil gedreht, jedoch werden immer noch sämtliche Öffnungen verschlossen. In Figur 9c beginnt sich an den beiden Stellen oben und unten die jeweilige Abdeckung mithilfe der Steuerscheibe von den Öffnungen aus der Arbeitskammer 40 zur Pufferkammer 30 zu öffnen. In Figur 9d sind die beiden Öffnungen oben und unten, wie auch die beiden zentralen Öffnungen der Entlüftungsvorrichtung 80 vollständig geöffnet. Mit anderen Worten besteht in der Figur 9b eine fluidkommunizierende Verbindung über eine Vielzahl von Öffnungen einer Entlüftungsvorrichtung 80 zwischen den Arbeitskammern 40 und der Pufferkammer 30. Durch diese Entlüftung, wird also eine Düse der fluidkommunizierenden Verbindung zwischen diesen beiden Kammern 30 und 40 überbrückt, sodass ein Zurückdrehen der bewegbaren Kolben 50, also der Drehflügel 54 ohne weiteres erfolgen kann, ohne dass ein Überdruck in der Arbeitskammer 40 aufgebaut werden würde. Die Steuerscheibe ermöglicht es also in einfacher Weise eine technische Lösung vorzusehen, mithilfe derer ein Verschließen der Tür direkt im Anschluss an die Notöffnung sofort wieder möglich ist, womit eine Blockade der Tür in der geöffneten Position vermieden wird.

Es ist selbstverständlich, dass die voranstehend erläuterten Ausführungsformen die Erfindung nur anhand von Beispielen beschreiben. Die einzelnen technischen Ausführungsformen können dabei vom Fachmann, soweit technisch sinnvoll, frei kombiniert werden und schränken den Schutzbereich der vorliegenden Erfindung nicht ein.

### Bezugszeichenliste

- 10: Sicherheitseinrichtung
- 20: Brennkammer
- 22: pyrotechnische Ladung
- 24: Anzündvorrichtung
- 30: Pufferkammer
- 32: Druckminderungsvorrichtung
- 40: Arbeitskammer
- 50: bewegbarer Kolben
- 52: Dichtung
- 54: Drehflügel
- 56: Dichtungskanal
- 58: Dichtungsnut
- 59: Dichtungselement
- 70: Abtriebsvorrichtung
- 72: Abtriebswelle
- 80: Entlüftungsvorrichtung
- 82: Überdruckventil
- 90: Steuervorrichtung
- 100: Dämpfungssystem
- 102: Dämpfungskammer
- 104: Dämpfungsdrosselventil
- RA: Rotationsachse

## Patentansprüche

1. Sicherheitseinrichtung (10) für Luftfahrzeuge zur Notöffnung von Türen und/oder Klappen, aufweisend:
zumindest eine Brennkammer (20), die eine pyrotechnische Ladung (22) enthält und wenigstens eine Anzündvorrichtung (24) zur elektrischen Anzündung der pyrotechnischen Ladung (22) aufweist,
zumindest eine Pufferkammer (30), die mit der Brennkammer (20) in fluidkommunizierender Verbindung steht, um durch die Anzündung und Verbrennung der pyrotechnischen Ladung (22) entstehendes Gas aufzunehmen,
zumindest eine Arbeitskammer (40), die mit zumindest einer Pufferkammer (30) in fluidkommunizierender Verbindung steht, um unter Druck stehendes Gas aus der Pufferkammer (30) aufzunehmen, wobei zumindest eine die Arbeitskammer (40) begrenzende Wandung einen bewegbaren Kolben (50) aufweist, so dass das Volumen der Arbeitskammer (40) über den Druck in der Arbeitskammer (40) variierbar ist, und
eine Abtriebsvorrichtung (70), die mit dem bewegbaren Kolben (50) kraftschlüssig und/oder drehmomentschlüssig verbunden ist.

2. Sicherheitseinrichtung (10) nach Anspruch 1, **dadurch gekennzeichnet, dass** in der fluidkommunizierenden Verbindung zwischen der Pufferkammer (30) und der Arbeitskammer (40) eine Druckminderungsvorrichtung (32) derart angeordnet ist, dass eine Druckminderung in Strömungsrichtung von der Pufferkammer (30) zu der Arbeitskammer (40) erfolgen kann.

3. Sicherheitseinrichtung (10) nach einem der vorangegangenen Ansprüche, **dadurch gekennzeichnet, dass** eine Entlüftungsvorrichtung (80) für die Arbeitskammer (40) vorgesehen ist, die eine fluidkommunizierende Verbindung zwischen der Arbeitskammer (40) und der Umgebung der Sicherheitseinrichtung (10) herstellt, wobei innerhalb dieser Entlüftungsvorrichtung (80) ein Überdruckventil (82) angeordnet ist, um den Druck in der Arbeitskammer (40) auf einen Maximaldruck zu begrenzen.

4. Sicherheitseinrichtung (10) nach Anspruch 3, **dadurch gekennzeichnet, dass** eine Steuervorrichtung (90) für die Entlüftungsvorrichtung (80) vorgesehen ist, die mit dem bewegbaren Kolben (50) derart verbunden ist, dass bei der Bewegung des bewegbaren Kolbens (50) zur Vergrößerung des Volumens der Arbeitskammer (40) die Steuervorrichtung (90) mit bewegt wird, so dass ab einer vorbestimmten Position des bewegbaren Kolbens (50) die Entlüftungsvorrichtung (80) die Arbeitskammer (40) zur Pufferkammer (30) und/oder, unter Umgehung des Überdruckventils (82), zur Umgebung der Sicherheitseinrichtung (10) entlüftet.

5. Sicherheitseinrichtung (10) nach einem der vorangegangenen Ansprüche, **dadurch gekennzeichnet, dass** der bewegbare Kolben (50) zur Arbeitskammer (40) hin mit einer Dichtung (52) abgedichtet ist.

6. Sicherheitseinrichtung (10) nach Anspruch 5, **dadurch gekennzeichnet, dass** die Dichtung (52) den bewegbaren Kolben (50) zumindest umlaufend entlang der feststehenden Wandungen der Arbeitskammer (40) Dichtlippen aufweist, die in einem spitzen Winkel von der der Arbeitskammer (40) zugewandten Wandung des bewegbaren Kolbens (50) abstehen und die feststehenden Wandungen der Arbeitskammer (40) berühren.

7. Sicherheitseinrichtung (10) nach einem der vorangegangenen Ansprüche, **dadurch gekennzeichnet, dass** es sich bei dem bewegbaren Kolben (50) um einen Drehkolben handelt, der mit der Abtriebsvorrichtung (70) in Form einer Abtriebswelle (72) drehmomentschlüssig verbunden ist.

8. Sicherheitseinrichtung (10) nach einem der vorangegangenen Ansprüche, **dadurch gekennzeichnet, dass** ein Dämpfungssystem (100) für die Bewegung des bewegbaren Kolbens (50) vorgesehen ist.

9. Sicherheitseinrichtung (10) nach Anspruch 8, **dadurch gekennzeichnet, dass** das Dämpfungssystem (100) eine Dämpfungskammer (102) aufweist, von deren Wandungen zumindest eine abschnittsweise derart von dem bewegbaren Kolben (50) gebildet wird, dass eine Bewegung des bewegbaren Kolbens (50) zur Vergrößerung des Volumens der Arbeitskammer (40) das Volumen der Dämpfungskammer (102) verkleinert, und dass die Dämpfungskammer (102) mit einem Dämpfungsdrosselventil (104) in fluidkommunizierender Verbindung steht, über das ein in der Dämpfungskammer (102) enthaltenes Fluid abführbar ist.

10. Sicherheitseinrichtung (10) nach einem der vorangegangenen Ansprüche, **dadurch gekennzeichnet, dass** es sich bei dem bewegbaren Kolben (50) um einen Drehkolben mit zumindest zwei Drehflügeln (54) handelt.

11. Sicherheitseinrichtung (10) nach Anspruch 10, **dadurch gekennzeichnet, dass** die Drehflügel symmetrisch zur Rotationsachse (RA) des Drehkolbens angeordnet sind.

12. Sicherheitseinrichtung (10) nach einem der vorangegangenen Ansprüche, **dadurch gekennzeichnet, dass** Dichtungskanäle (56) vorhanden sind, die die Pufferkammer (30) in fluidkommunizierender Weise mit Dichtnuten (58) verbinden, so dass Druck in der Pufferkammer (30) eine Druckkraft auf Dichtungselemente (59) in den Dichtnuten (58) ausüben kann.

13. Sicherheitseinrichtung (10) nach einem der vorangegangenen Ansprüche, **dadurch gekennzeichnet, dass** eine Kupplungsvorrichtung vorgesehen ist, die mit der Abtriebsvörrichtung (70) kraftschlüssig und/oder drehmomentschlüssig verbunden ist, und die derart ausgestaltet ist, dass sie den Kraft- und/oder Drehmomentabtrieb von der Abtriebsvorrichtung (70) nur im Fall der Anzündung der pyrotechnischen Ladung (22) herstellt.

14. Tür oder Klappe für ein Luftfahrzeug, aufweisend zumindest eine Sicherheitseinrichtung (10) mit den Merkmalen eines der Ansprüche 1 bis 13.

## Claims

1. A safety device (10) for aircraft for the emergency opening of doors and/or hatches, having:
at least one combustion chamber (20), which contains a pyrotechnical charge (22) and has at least one ignition device (24) for electrically igniting the pyrotechnical charge (22),
at least one buffer chamber (30), which is connected in a fluid-communicating manner to the combustion chamber (20), in order to accommodate gas created by the ignition and combustion of the pyrotechnical charge (22),
at least one working chamber (40), which is connected in a fluid-communicating manner to at least one buffer chamber (30), in order to accommodate pressurised gas from the buffer chamber (30), wherein at least one wall delimiting the working chamber (40) has a movable piston (50), so that the volume of the working chamber (40) can be varied by means of the pressure in the working chamber (40), and
an output device (70), which is connected to the movable piston (50) in a force-locking and/or torque-locking manner.

2. The safety device (10) according to Claim 1, **characterised in that** a pressure-reducing device (32) is arranged in the fluid-communicating connection between the buffer chamber (30) and the working chamber (40) in such a manner that a pressure reduction can take place in the flow direction from the buffer chamber (30) to the working chamber (40).

3. The safety device (10) according to one of the preceding claims, **characterised in that** a ventilation device (80) is provided for the working chamber (40), which produces a fluid-communicating connection between the working chamber (40) and the surroundings of the safety device (10), wherein a pressure relief valve (82) is arranged inside this ventilation device (80), in order to limit the pressure in the working chamber (40) to a maximum pressure.

4. The safety device (10) according to Claim 3, **characterised in that** a control device (90) is provided for the ventilation device (80), which is connected to the movable piston (50) in such a manner that when the movable piston (50) moves to enlarge the volume of the working chamber (40), the control device (90) is also moved, so that from a predetermined position of the movable piston (50), the ventilation device (80) vents the working chamber (40) to the buffer chamber (30) and/or, while bypassing the pressure relief valve (82), to the surroundings of the safety device (10).

5. The safety device (10) according to one of the preceding claims, **characterised in that** the movable piston (50) is sealed towards the working chamber (40) using a seal (52).

6. The safety device (10) according to Claim 5, **characterised in that** the seal (52) has sealing lips at least partially surrounding the movable piston (50) along the fixed walls of the working chamber (40), which sealing lips protrude at an acute angle from the wall of the movable piston (50) facing the working chamber (40) and touch the fixed walls of the working chamber (40).

7. The safety device (10) according to one of the preceding claims, **characterised in that** the movable piston (50) is a rotary piston, which is connected to the output device (70) in the form of an output shaft (72) in a torque-locking manner.

8. The safety device (10) according to one of the preceding claims, **characterised in that** a damping system (100) is provided for the movement of the movable piston (50).

9. The safety device (10) according to Claim 8, **characterised in that** the damping system (100) has a damping chamber (102), at least one of the walls of which is formed in certain sections by the movable piston (50) in such a manner that a movement of the movable piston (50) for enlarging the volume of the working chamber (40) reduces the volume of the damping chamber (102), and **in that** the damping chamber (102) is connected in a fluid-communicating manner to a damping throttle valve (104), by means of which the fluid contained in the damping chamber (102) can be discharged.

10. The safety device (10) according to one of the preceding claims, **characterised in that** the movable piston (50) is a rotary piston having at least two rotary vanes (54).

11. The safety device (10) according to Claim 10, **characterised in that** the rotary vanes are arranged symmetrically to the rotational axis (RA) of the rotary piston.

12. The safety device (10) according to one of the preceding claims, **characterised in that** sealing channels (56) are present, which connect the buffer chamber (30) to sealing grooves (58) in a fluid-communicating manner, so that pressure in the buffer chamber (30) can exert a pressure force on sealing elements (59) in the sealing grooves (58).

13. The safety device (10) according to one of the preceding claims, **characterised in that** a clutch device is provided, which is connected to the output device (70) in a force-locking and/or torque-locking manner, and which is configured in such a manner that it only produces the force and/or torque output from the output device (70) in the event of the ignition of the pyrotechnical charge (22).

14. A door or hatch for an aircraft, having at least one safety device (10) with the features of one of Claims 1 to 13.

## Revendications

1. Système de sécurité (10) pour des aéronefs, pour l'ouverture d'urgence de portes et/ou de volets, comportant :
au moins une chambre de combustion (20) contenant une charge pyrotechnique (22) et comportant au moins un dispositif d'amorçage (24) pour l'amorçage électrique de la charge pyrotechnique (22),
au moins un compartiment tampon (30) qui est en liaison par communication de fluide avec la chambre de combustion (20) pour absorber du gaz généré par l'amorçage et la combustion de la charge pyrotechnique (22),
au moins une chambre de travail (40) qui est en liaison par communication de fluide avec au moins un compartiment tampon (30) pour absorber du gaz sous pression à partir du compartiment tampon (30), au moins une paroi délimitant la chambre de travail (40) comportant un piston (50) mobile, de sorte que le volume de la chambre de travail (40) puisse être varié par l'intermédiaire de la pression dans la chambre de travail (40) et
un dispositif de force descensionnelle (70) qui est relié par complémentarité de force et/ou par transmission de couple avec le piston (50) mobile.

2. Système de sécurité (10) selon la revendication 1, **caractérisé en ce que** dans la liaison par communication de fluide, entre le compartiment tampon (30) et la chambre de travail (40), un dispositif réducteur de pression (32) est placé de telle sorte qu'une réduction de pression puisse s'effectuer dans la direction d'écoulement, du compartiment tampon (30) vers la chambre de travail (40).

3. Système de sécurité (10) selon l'une quelconque des revendications précédentes, **caractérisé en ce qu'**il est prévu un dispositif de purge (80) pour la chambre de travail (40) qui établit une liaison par communication de fluide entre la chambre de travail (40) et l'environnement du système de sécurité (10), à l'intérieur dudit dispositif de purge (80) étant placée une soupape de surpression (82) pour limiter la pression dans la chambre de travail (40) à une pression maximale.

4. Système de sécurité (10) selon la revendication 3, **caractérisé en ce qu'**il est prévu un dispositif de commande (90) pour le dispositif de purge (80) qui est relié avec le piston mobile (50) de telle sorte que lors du déplacement du piston mobile (50), pour agrandir le volume de la chambre de travail (40), le dispositif de commande (90) est co-déplacé, de sorte qu'à partir d'une position prédéfinie du piston mobile (50), le dispositif de purge (80) purge la chambre de travail (40) vers le compartiment tampon (30) et/ou en contournant la soupape de surpression (82) vers l'environnement du système de sécurité (10).

5. Système de sécurité (10) selon l'une quelconque des revendications précédentes, **caractérisé en ce que** l'étanchéité du piston mobile (50) est assurée vers la chambre de travail (40) à l'aide d'un joint (52).

6. Système de sécurité (10) selon la revendication 5, **caractérisé en ce que** le joint (52) du piston mobile (50) comporte au moins en périphérie le long des parois stationnaires de la chambre de travail (40) des lèvres d'étanchéité qui débordent sous un angle aigu de la paroi du piston mobile (50) faisant face à la chambre de travail (40) et qui touchent les parois stationnaires de la chambre de travail (40).

7. Système de sécurité (10) selon l'une quelconque des revendications précédentes, **caractérisé en ce que** le piston mobile (50) est un piston rotatif, qui est relié par transmission de couple avec le dispositif de force descensionnelle (70) sous la forme d'un arbre de sortie (72).

8. Système de sécurité (10) selon l'une quelconque des revendications précédentes, **caractérisé en ce qu'**il est prévu un système amortisseur (100) pour le déplacement du piston mobile (50).

9. Système de sécurité (10) selon la revendication 8, **caractérisé en ce que** le système amortisseur (100) comporte une chambre d'amortissement (102) dont les parois sont formées au moins en partie par le piston mobile (50), de telle sorte que pour agrandir le volume de la chambre de travail (40), un déplacement du piston mobile (50) diminue le volume de la chambre d'amortissement (102) et **en ce que** la chambre d'amortissement (102) est en liaison de communication par fluide avec une soupape self d'amortissement (104) par l'intermédiaire de laquelle du fluide contenu dans la chambre d'amortissement (102) peut être évacué.

10. Système de sécurité (10) selon l'une quelconque des revendications précédentes, **caractérisé en ce que** le piston mobile (50) est un piston rotatif, avec au moins deux ailettes rotatives (54).

11. Système de sécurité (10) selon la revendication 10, **caractérisé en ce que** les ailettes rotatives sont placées de manière symétrique par rapport à l'axe de rotation (RA) du piston rotatif.

12. Système de sécurité (10) selon l'une quelconque des revendications précédentes, **caractérisé en ce que** des canaux d'étanchéité (56) sont présents qui relient le compartiment tampon (30) de manière communicante par fluide avec des rainures d'étanchéité (58), de sorte que la pression dans le compartiment tampon (30) puisse exercer un effort de pression sur des éléments d'étanchéité (59) dans les rainures d'étanchéité (58).

13. Système de sécurité (10) selon l'une quelconque des revendications précédentes, **caractérisé en ce qu'**il est prévu un dispositif d'accouplement qui est relié par complémentarité de force ou par transmission de couple avec le dispositif de force descensionnelle (70) et qui est conçu de sorte à établir la liaison par force et/ou par couple du dispositif de force descensionnelle (70) uniquement dans le cas de l'amorçage de la charge pyrotechnique (22).

14. Porte ou volet pour un aéronef, comportant au moins un système de sécurité (10) avec les caractéristiques de l'une quelconque des revendications 1 à 13.
